Europäisches Patentamt

European Patent Office

Office européen des brevets

(19)

(11) Numéro de publication: **0 235 018**
**B1**

# (12) FASCICULE DE BREVET EUROPEEN

(45) Date de publication du fascicule du brevet:
**16.08.89**

(21) Numéro de dépôt: **87400272.8**

(22) Date de dépôt: **05.02.87**

(51) Int. Cl.⁴: **E05D 15/10, B60J 5/06**

(54) **Dispositif de guidage pour panneau coulissant et louvoyant, notamment pour porte de véhicule.**

(30) Priorité: **07.02.86 FR 8601689**

(43) Date de publication de la demande:
**02.09.87 Bulletin 87/36**

(45) Mention de la délivrance du brevet:
**16.08.89 Bulletin 89/33**

(84) Etats contractants désignés:
**AT BE CH DE GB IT LI LU NL**

(56) Documents cités:
**EP-A- 0 124 196**
**AU-B- 28 187**
**CH-A- 565 057**
**DE-B- 1 238 502**
**FR-A- 2 035 958**
**FR-A- 2 128 952**

(73) Titulaire: **Etablissements FARNIER ET PENIN, Zone Industrielle No. 2 Route de Poitiers, F-79300 Bressuire(FR)**

(72) Inventeur: **Jeuffray, Jean-Marie, 8 rue de l'Ouche, F-79300 Bressuire(FR)**
Inventeur: **Lavilie, Bernard, 29 rue de Chambroutet St. Porchaire, F-79300 Bressuire(FR)**

(74) Mandataire: **Robert, Jean-Pierre et al, CABINET BOETTCHER 23, rue la Boétie, F-75008 Paris(FR)**

ACTORUM AG

## Description

Une porte coulissante et louvoyante est une porte qui, en fin de course de fermeture ou début de course d'ouverture, dont la direction générale est parallèle à la structure fixe dans laquelle l'ouverture à obturer est ménagée, se rapproche ou s'éloigne de cette structure. Ce mouvement est avantageux car il permet d'assurer un contact meilleur entre la porte et le dormant de l'ouverture lorsque la porte est fermée et en conséquence une bonne étanchéité de l'obturation tant à l'eau qu'à l'air.

Les guides mis en oeuvre pour assurer un tel trajet à la porte possèdent donc une partie d'extrémité en courbe dirigée vers le flanc de la carrosserie du véhicule, si la structure fixe est constituée par une caisse de véhicule. Les galets associés à la porte qui coopèrent avec ces guides doivent posséder un certain degré de liberté par rapport à cette dernière pour pouvoir rouler sans inconvénients ni frottements trop importants dans ces parties courbes. Les galets sont donc montés flottants ou oscillants sur le vantail mobile de la porte, ce qui présente un inconvénient dans le fait que la liaison du vantail à la structure par l'intermédiaire des guides et galets n'est pas très rigide. Il s'ensuit des vibrations possibles de la porte génératrices d'usure et de bruit.

La présente invention concerne un dispositif de guidage pour un panneau coulissant, louvoyant en fin de course de fermeture ou en début de course d'ouverture, constituant notamment une porte pour un véhicule de transport en commun, le panneau comportant une partie vertical parallèle à la paroi verticale de la caisse du véhicule et une partie supérieure en retour et parallèle à la paroi de pavillon de ladite caisse. Ce dispositif de guidage comporte deux galets solidaires du panneau et coopérant avec au moins un rail de guidage courant le long de la paroi de caisse, ledit rail comprenant deux parties identiques dans le prolongement l'une de l'autre, chacune d'elles, parcourue par un seul des deux galets susdits, possédant une surface de roulement comprenant une portion rectiligne horizontale et une portion d'extrémité dirigée vers la paroi verticale de la caisse et vers le bas.

Un tel dispositif est connu du AU-B 28 187. Ce document propose un guidage de panneau de porte plan avec ces diverses composantes de louvoiement. Dans ce document, la porte est suspendue à un rail de guidage supérieur par deux galets. Ce rail est en deux parties, terminées chacune par une extrémité en pente et dirigée vers l'intérieur du véhicule. Chaque galet roule sur une seule partie du rail, si bien qu'en fin de course de fermeture, le panneau de porte descend et se rapproche, pour s'y plaquer, de la caisse du véhicule. Dans ce document il n'y a aucun guidage de la partie inférieure de la porte qui, en position d'ouverture n'est que suspendue et en position de fermeture doit être maintenue verrouillée contre la caisse du véhicule.

En outre, une telle porte ne se prête pas à une commande automatique de sa manœuvre et n'est pas adaptée à un fonctionnement sans vibrations. L'invention vise à remédier à ces inconvénients.

Dans ce but le dispositif de guidage selon l'invention est caractérisé en ce que le rail de guidage susdit est un rail inférieur et le dispositif comprend au moins un rail supérieur formant un chemin de guidage horizontal sur le pavillon de la caisse pour un galet solidaire de la partie supérieure du panneau, ledit chemin de guidage horizontal étant délimité par deux rives verticales parallèles entre elles et parallèles à la projection horizontale de l'une ou l'autre des parties de rail inférieur et lesdites rives ayant une hauteur au moins égale à l'abaissement vertical de la surface de roulement susdite.

Dans un mode préféré de réalisation de l'invention, les galets inférieurs sont des galets à gorge, montés à rotation autour d'axes fixes perpendiculaires à la partie verticale du panneau, tandis que le rail inférieur correspondant possède, dans sa portion rectiligne, un profil correspondant au profil de la gorge et dans sa portion d'extrémité un profil de section droite variable en diminuant.

Le profil de section droite variable susdit est engendré par le profil de la section de la gorge du galet susdit lors du déplacement de ce profil parallèlement à lui-même le long d'une ligne correspondant au trajet de louvoiement désiré du panneau.

En outre, chaque partie de rail inférieur comporte un contre-rail supérieur coopérant avec jeu avec le galet correspondant disposé latéralement par rapport au plan de la partie verticale du panneau, qui est en une seule pièce avec la portion rectiligne du rail correspondant et qui est constitué par une pièce supérieure rapportée en regard de la portion d'extrémité.

Enfin le galet supérieur est monté à rotation autour d'un axe fixe, solidaire de la partie de panneau en retour sur le pavillon de la caisse et parallèle aux rives verticales susdites, et est constitué par une roue de diamètre au plus égal à la largeur du chemin de guidage délimité par les deux rives.

L'invention sera mieux comprise au cours de la description donnée ci-après à titre d'exemple purement indicatif et non limitatif qui permettra d'en dégager les avantages et les caractéristiques secondaires.

Il sera fait référence aux dessins annexés dans lesquels :

- la figure 1 est une vue schématique en coupe d'un panneau de porte guidé conformément à l'invention alors qu'il est dans une position intermédiaire sur ses rails de guidage;
- la figure 2 est une même vue schématique que la figure 1, le panneau de porte étant dans sa position de fermeture;
- la figure 3 est une vue schématique de dessus du panneau de porte et des rails de guidage;
- la figure 4 est une vue schématique de face du panneau et de ses rails de guidage selon l'invention ;
- la figure 5 est une vue de face de la portion d'extrémité de l'un des rails inférieurs;
- la figure 6 est une vue en coupe suivant la ligne VI-VI de la figure 5,
- la figure 7 est une coupe de la section courante du rail inférieur.

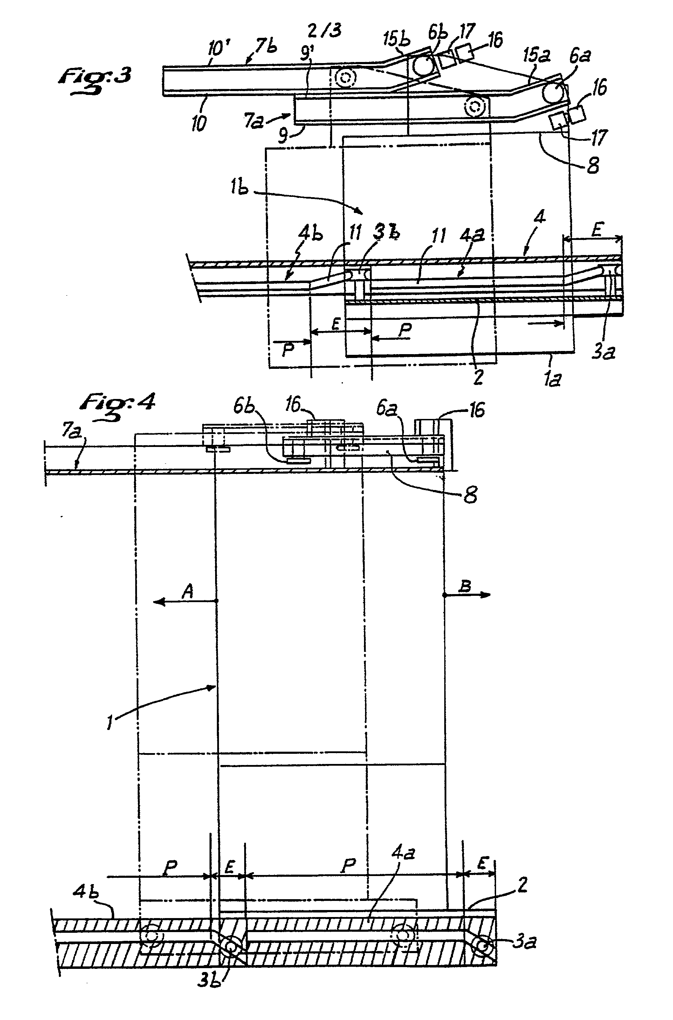

En se reportant tout d'abord aux quatre premières figures, on voit un panneau 1 pouvant constituer le vantail d'une porte de véhicule non représenté possédant une partie sensiblement verticale 1a et une partie en équerre 1b surmontant la partie verticale 1a. Le vantail 1 est équipé à sa partie inférieure d'un support 2 lié à un système d'entraînement motorisé connu en lui-même et non représenté, susceptible de provoquer le déplacement du vantail dans chacun des sens A et B (figure 3) pour respectivement découvrir ou obturer l'ouverture du véhicule.

Le guidage du vantail, dans ce déplacement le long d'un flanc du véhicule, est assuré dans la partie inférieure au moyen de galets inférieurs 3a 3b montés à rotation autour d'un axe perpendiculaire au flanc et solidaire du support 2 qui sont capables de rouler dans un rail 4, parallèle au flanc du véhicule et solidaire d'un élément 5a de structure de ce véhicule situé en bas de caisse. Les galets 3a et 3b sont des galets porteurs soutenant le panneau 1. Dans la partie supérieure du panneau, le guidage est assuré au moyen de galets 6a et 6b dans des chemins de guidage 7a et 7b. Les galets 6a et 6b sont montés à rotation autour d'axes sensiblement verticaux portés par une plaque de support 8 elle-même solidaire de la partie 1b du panneau 1 et dans le prolongement de celle-ci. Les chemins de guidage 7a et 7b sont, quant à eux, constitués par des rives verticales 9,9' pour le chemin 7a et 10,10' pour le chemin 7b, constituées par exemple par les ailes d'un profilé de section en U solidaires d'un élément de structure 5b horizontal appartenant au pavillon du véhicule. L'écartement des rives 9,9' ou 10,10' d'un chemin de guidage est légèrement supérieur au diamètre des galets 6a 6b qui ne retiennent le panneau par rapport à la structure que dans une direction perpendiculaire au sens A et B susdits. La hauteur de ces rives est telle qu'un mouvement vertical des galets 6a et 6b est possible sans échapper des chemins de guidage; le mode de réalisation représenté peut avoir une variante dans laquelle le support 8 ne comporte qu'un galet et l'élément de structure 5b ne comporte qu'un chemin de guidge.

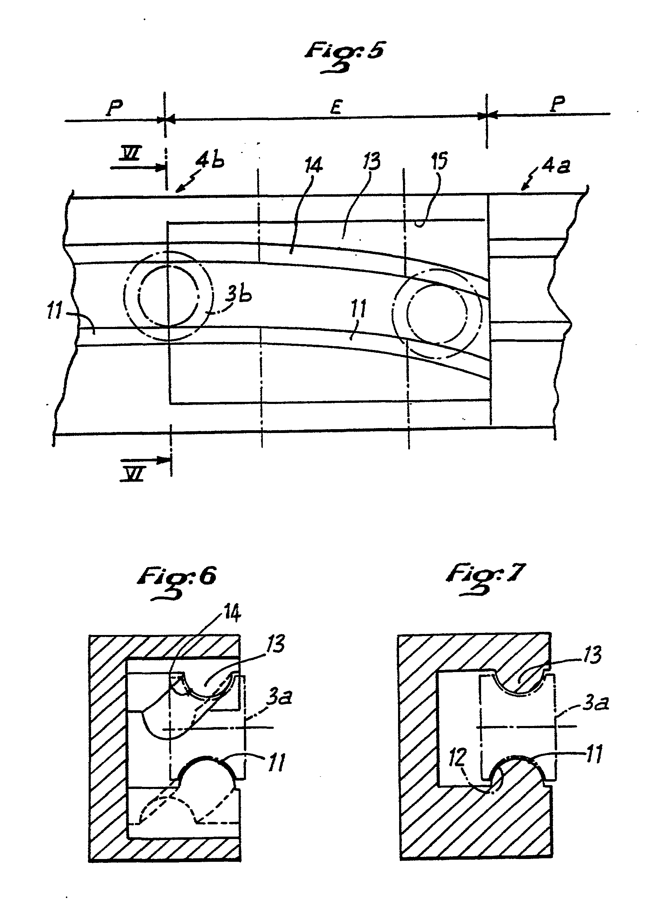

Le rail 4 est constitué, pour un vantail, par deux parties 4a et 4b (identiques) dans le prolongement l'une de l'autre selon les directions AB. Chacune de ces parties est parcourue par un seul des deux galets 3a et 3b et sa longueur est égale à la distance horizontale séparant ces deux galets. Chaque partie 4a ou 4b est divisée en deux portions, à savoir une portion principale P sensiblement rectiligne dont la section courante est représentée en figure 7 et une portion d'extrémité E représentée vue en bout sur la figure 6 et vue de face sur la figure 5.

On voit sur les figures 5 à 7 que chaque partie de rail 4a, 4b possède une surface de roulement inférieure 11 dont le profil est identique à celui de la gorge 12 du galet à gorge correspondant 3a 3b, de au moins le long de la portion P. Au-dessus de cette surface 11, un autre rail 13 présente une surface inférieure 14 qui pénêtre dans la gorge 12, avec un certain jeu nécessaire au roulement du galet, pour constituer une retenue ce ce dernier sur le rail à l'encontre d'un mouvement de bas en haut. Dans la portion P susdite, le rail et le contre-rail sont en une seule pièce (figure 7). Dans la portion E, le rail et le contre-rail sont en deux parties distinctes qui sont rapportées l'une en regard de l'autre dans un logement 15 prévu à cet effet dans le profilé formant la partie courante de la portion P du rail.

On voit sur les figures 5 et 6 que dans la portion E, le rail et le contre-rail suivent une courbe qui descend et se dirige vers l'élément de structure auquel ils sont attelés. Sur la figure 3 on voit la projection horizon tale de cette courbe alors que la figure 4 illustre schématiquement sa projection sur un plan vertical. Ainsi lorsque les galets 3a et 3b atteignent, par roulement dans la direction B, la zone E de leur partie de rail respective 4a, 4b, leur trajectoire est dirigée vers le bas et vers la caisse du véhicule, guidant ainsi le panneau 1 contre le dormant de l'ouverture à obturer. Il faut noter à cet égard que les galets 3a et 3b restant dans ce déplacement parallèles à eux-mêmes, leur axe de rotation n'est plus perpendiculaire à l'axe de la projection horizontale de la surface 11 sur laquelle ils roulent. Pour qu'il n'y ait pas de coincement du galet, le profil de la surface 11 et, dans une moindre mesure du fait du jeu de fonctionnement existant, celui du contre-rail, ne sont pas constants le long de la rampe. Il va en s'amenuisant afin d'éviter que les parois de la gorge 12 ne "talonnent". Ce profil variable est obtenu par une fraise de forme possédant une gorge semblable à celle des galets qui, pendant l'usinage, est animée d'un mouvement identique au trajet désiré pour le galet. Cette taille particulière des portions de rail et contre-rail dans la zone E susdite justifie le fait qu'elles soient en deux parties rapportées et présente l'avantage de supprimer tout degré de liberté en oscillation de l'axe de rotation des galets par rapport au panneau. Cette liaison rigide entre galets et panneau assure un très bon guidage de la porte et supprime une grande partie des vibrations de cette dernière.

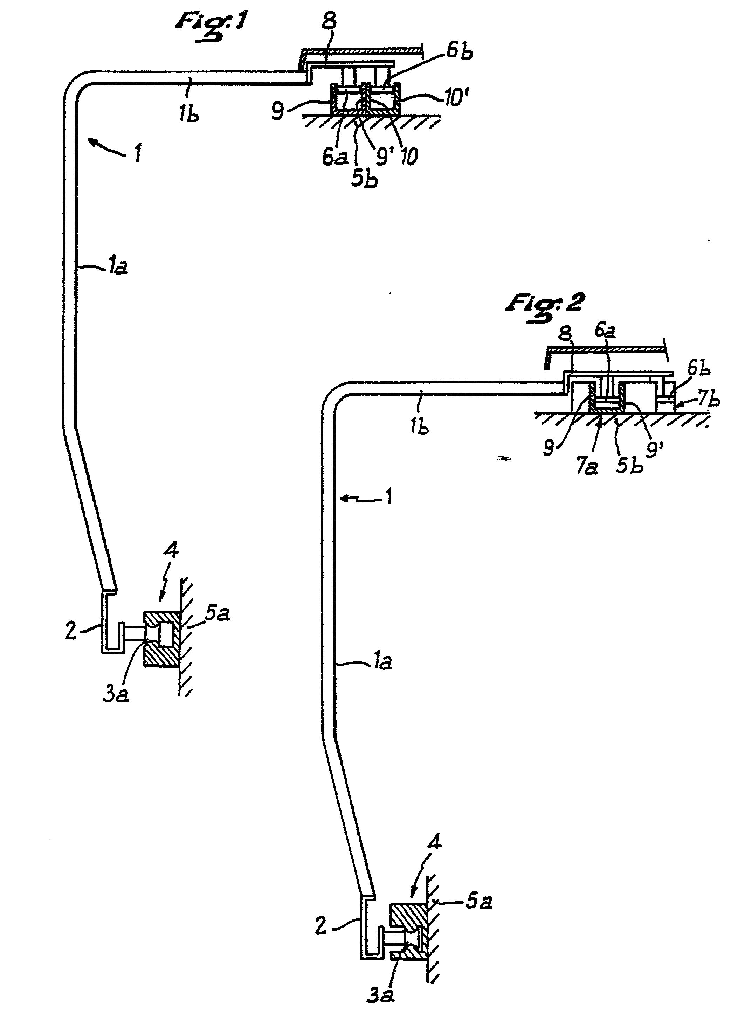

Pour ce qui concerne le guidage supérieur du panneau 1, on notera que les chemins de guidage 7a 7b possèdent également deux portions, l'un rectiligne parallèle à la portion P du rail inférieur, l'autre d'extrémité 15a 15b, parallèle à la projection horizontale du trajet défini par la portion E du rail inférieur. Lorsque les galets 3a et 3b évoluent dans la zone E de leur partie de rail respective, les galets 6a et 6b sont guidés horizontalement dans les parties 15a et 15b des rails 7a et 7b de manière à conserver le panneau 1 parallèle à lui-même et descendent entre les rives 9,9', 10,10' susdites de la position représentée en figure 1 à la position de la figure 2.

En fin de course de fermeture, alors que les galets 3a et 3b sont maintenus au bas de la rampe des zones E du rail inférieur, l'immobilisation de la partie supérieure du panneau est assurée par la coopération de butées fixe 16 et mobile 17 avec le panneau, équipées respectivement de surfaces correspondantes mâles et femelles pour opérer un maintien centré de la partie supérieure du panneau par rapport à la caisse du véhicule.

L'invention trouve une application intéressante dans le domaine de la construction d'accessoires de véhicules de transport en commun.

## Revendications

1. Dispositif de guidage pour un panneau coulissant (1), louvoyant en fin de course de fermeture ou en début de course d'ouverture, constituant notamment une porte pour un véhicule de transport en commun, le panneau comportant une partie (1a) verticale parallèle à la paroi verticale de la caisse du véhicule et une partie supérieure (1b) en retour et parallèle à la paroi de pavillon de ladite caisse, ledit dispositif de guidage comportant deux galets (3a, 3b) solidaires du panneau (1) qui coopèrent avec au moins un rail (4) de guidage courant le long de la paroi de caisse, ledit rail comprenant deux parties identiques (4a, 4b) dans le prolongement l'une de l'autre, chacune d'elles, parcourue par un seul des deux galets (3a, 3b) susdits, possédant une surface de roulement (11) comprenant une portion rectiligne (P) horizontale et une portion d'extrémité (E) dirigée vers la paroi verticale de la caisse et vers le bas, caractérisé en ce que le rail (4) susdit est un rail inférieur et en ce que le dispositif comprend au moins un rail supérieur (7a) formant un chemin de guidage horizontal sur le pavillon de la caisse pour un galet (6a) solidaire de la partie supérieure du panneau, ledit chemin de guidage horizontal étant délimité par deux rives verticales (9, 9') parallèles entre elles et parallèles à la projection horizontale de l'une ou l'autre des parties (4a, 4b) de rail inférieur (4) et lesdites rives ayant une hauteur au moins égale à l'abaissement vertical de la surface de roulement (11) susdite.

2. Dispositif selon la revendication 1, caractérisé en ce que les galets inférieurs (3a, 3b) sont des galets à gorge (12), montés à rotation autour d'axes fixes perpendiculaires à la partie verticale (1a) du panneau (1), tandis que le rail inférieur correspondant possède, dans sa portion rectiligne (P) un profil (11) correspondant au profil de la gorge (12) et dans sa portion d'extrémité (E) un profil de section droite variable en s'amenuisant.

3. Dispositif selon la revendication 2, caractérisé en ce que le profil de section droite variable susdit est engendré par le profil de la section de la gorge (12) du galet susdit lors du déplacement de ce profil parallèlement à lui-même le long d'une ligne correspondant au trajet de louvoiement désiré du panneau (1).

4. Dispositif selon l'une quelconque des revendications précédentes caractérisé en ce que chaque partie (4a 4b) de rail (4) inférieur comporte un contre-rail (13) supérieur coopérant avec jeu avec le galet (3a 3b) correspondant disposé latéralement par rapport au plan de la partie verticale du panneau.

5. Dispositif selon la revendication 4, caractérisé en ce que le contre-rail (13) susdit est en une seule pièce avec la portion rectiligne (P) du rail correspondant, et est constitué par une pièce supérieure rapportée en regard de la portion d'extrémité du rail (E) , elle-même constituée par une pièce rapportée.

6. Dispositif selon l'une quelconque des revendications précédentes, caractérisé en ce que le galet (6a) supérieur est monté à rotation autour d'un axe fixe, solidaire de la partie de panneau (13) en retour sur le pavillon de la caisse et parallèle aux rives (9,9') verticales susdites, et est constitué par une roue de diamètre au plus égal à la largeur du chemin de guidage délimité par les deux rives (9,9')

7. Dispositif selon la revendication 6, caractérisé en ce qu'il comporte deux chemins de guidage (7a 7b) supérieurs pour deux galets (6a 6b) solidaires de la partie (1b) en retour du panneau (1).

8. Dispositif selon l'une quelconque des revendications précédentes, caractérisé en ce qu'il comporte, au voisinage du rail de guidage supérieur, un organe de butée (16) et de centrage du panneau (1) en fin de course de fermeture de ce dernier, fixe par rapport à la caisse, pour coopérer avec un organe (17) de forme complémentaire porté par le panneau.

## Patentansprüche

1. Führungseinrichtung für eine verschiebbare Platte (1), die am Ende des Schließweges oder am Anfang des Öffnungsweges eine zur Verschiebebewegung schräge Bewegung macht und die insbesondere eine Tür für ein öffentliches Transportfahrzeug bildet, wobei die Platte einen vertikalen, zur Vertikalwand des Fahrzeugaufbaus parallelen Abschnitt (1a) und einen oberen, nach hinten zur Deckenwand des Aufbaus gebogenen und zu dieser parallelen Abschnitt (1b) aufweist, wobei ferner die Führungseinrichtung zwei mit der Platte (1) fest verbundene Führungsrollen (3a, 3b) umfaßt, die mit wenigstens einer entlang der Wand des Aufbaus verlaufenden Führungsschiene (4) zusammenwirken, welche zwei identische, jeweils in Verlängerung der anderen liegende Abschnitte (4a, 4b) aufweist, deren jeder von einer einzigen der beiden Führungsrollen (4a, 4b) durchlaufen wird und jeweils eine Rollfläche (11) hat, die einen geradlinigen, horizontalen Abschnitt (P) und einen auf die Vertikalwand des Aufbaus zu und nach unten gerichteten Endabschnitt (E) aufweist, dadurch gekennzeichnet, daß die genannte Führungsschiene (4) eine untere Schiene ist und daß die Einrichtung wenigstens eine obere Schiene (7a) besitzt, die einen an der Deckenwand des Aufbaus angeordneten horizontalen Führungsweg für eine mit dem oberen Abschnitt der Platte fest verbundene Führungsrolle (6a) bildet, wobei dieser horizontale Führungsweg durch zwei zueinander und zur horizontalen Projektion des einen oder des anderen der Abschnitte (4a, 4b) der unteren Schiene (4) parallele vertikale Seitenwände (9, 9') begrenzt ist und die Seitenwände eine Höhe haben, die zumindest der vertikalen Absenkung der genannten Rollfläche (11) gleich ist.

2. Einrichtung nach Anspruch 1, dadurch gekennzeichnet, daß die unteren Führungsrollen (3a, 3b) jeweils Rollen mit einer Auskehlung (12) sind, die um feste, senkrecht zum vertikalen Abschnitt (1a) der Platte (1) stehende Achsen drehbar gelagert sind, wobei die zugeordnete untere Schiene in ihrem geradlinigen Abschnitt (P) ein Profil (11) hat, welches dem Profil der Kehlung (12) entspricht, und in ihrem Endbereich (E) ein variables, sich verkleinerndes Querschnittsprofil hat.

3. Einrichtung nach Anspruch 2, dadurch gekennzeichnet, daß das variable Querschnittsprofil dadurch erzeugt ist, daß ein Profil entsprechend dem Querschnitt durch die Kehlung (12) der Führungsrolle zu sich selbst parallel bleibend entlang einer Linie verschoben wird, die dem Verlauf der erwünschten Schrägbewegung der Platte (1) entspricht.

4. Einrichtung nach einem der vorangehenden Ansprüche, dadurch gekennzeichnet, daß jeder Abschnitt (4a, 4b) der unteren Schiene (4) eine obere Gegenschiene (13) umfaßt, die mit Spiel mit der zugeordneten, bezüglich der Ebene des vertikalen Abschnittes der Platte seitlich angeordneten Führungsrolle (3a, 3b) zusammenwirkt.

5. Einrichtung nach Anspruch 4, dadurch gekennzeichnet, daß die Gegenschiene (13) mit dem geradlinigen Abschnitt (P) der zugeordneten Schiene einstückig ausgebildet und aus einem oberen Teil gebildet ist, welches an den Endabschnitt (E) der Schiene angesetzt ist, wobei dieser selbst ebenfalls durch ein Ansetzteil gebildet ist.

6. Einrichtung nach einem der vorangehenden Ansprüche, dadurch gekennzeichnet, daß die obere Führungsrolle (6a) um eine feste Achse drehbar gelagert ist, die mit dem nach hinten zur Deckenwand des Aufbaus gebogenen Abschnitt (1b) fest verbunden und zu den vertikalen Seitenwänden (9, 9') parallel ist und daß sie durch ein Rad gebildet ist mit einem Durchmesser, welcher im wesentlichen gleich der Breite des durch die beiden Seitenwände (9, 9') begrenzten Führungsweges ist.

7. Einrichtung nach Anspruch 6, dadurch gekennzeichnet, daß sie zwei obere Führungswege (7a, 7b) für zwei mit dem nach hinten gebogenen Abschnitt (1b) der Platte (1) fest verbundene Führungsrollen (6a, 6b) umfaßt.

8. Einrichtung nach einem der vorangehenden Ansprüche, dadurch gekennzeichnet, daß sie in der Nähe der oberen Führungsschiene ein Organ (16) für den Anschlag und zur Zentrierung der Platte (1) am Ende des Schließweges der letzteren aufweist, welches bezüglich des Aufbaus fest angeordnet ist und welches mit einem komplementären Organ (17) zusammenwirkt, das an der Platte befestigt ist.

**Claims**

1. A guidance system for a sliding panel, e.g. a door panel for a public transport vehicle, which has a swinging motion at the end of its closure stroke and at the beginning of its opening stroke, the panel comprising a vertical portion (1a) parallel to the vertical wall of the vehicle bodywork and a top portion (1b) extending inwardly parallel to the roof wall of said vehicle bodywork, said guidance system comprising two wheels (3a, 3b) fixed to the panel (1) which cooperate with at least one guidance rail (4) running along the wall of the bodywork, said guidance rail including two identical aligned portions (4a, 4b) placed one after the other, with each of them having a single corresponding one of said wheels (3a, 3b) running therealong, each of said portion having a running surface (11) comprising a horizontal rectilinear part (P) and a end part (E) which is directed downwardly and towards the vertical wall of the bodywork, characterized in that the rail (4) is a bottom rail and in that the system includes at least one top rail (7a) being an horizontal guide path on the roof of the bodywork for a wheel (6a) fixed to the top portion of the panel, said horizontal guide path being delimited by two vertical edges (9, 9') which are parallel to each other and parallel to the horizontal projection of one or other of the portions (4a, 4b) of the bottom rail (4), said edges being of a height which is at least equal to the vertical drop of said running surface (11).

2. A system according to claim 1, characterized in that the bottom wheels (3a, 3b) are grooved wheels (12) mounted to rotate about fixed axes extending perpendicularly to the vertical portion (1a) of the panel (1) the corresponding bottom rail having a profile in its rectilinear part (P) which corresponds to the profile (11) of the groove (12) and having a profile in its end part (E) which is of variable and tapering right cross-section.

3. A system according to claim 2, characterized in that the above-specified variable right cross-section is generated by a profile having the same cross-section as the groove (12) of the wheel being displaced parallel to itself along a line corresponding to the desired swinging path for the panel (1).

4. A system according to claim 1, characterized in that each portion (4a, 4b) of the bottom rail (4) includes an upper backing rail (13) co-operating with the corresponding wheel (3a, 3b) with a suitable degree of play, and disposed to one side of the plane defined by the vertical portion of the panel.

5. A system according to claim 4, characterized in that the backing rail (13) is integrally formed with the rectilinear part (P) of the corresponding rail, and in the end part (E) of the rail is constituted by an add-on part disposed opposite said end part of the rail which is itself also constituted by an add-on part.

6. A system according to anyone of the preceding claims, characterized in that the top wheel (6a) is mounted to rotate about a fixed axis which is fixed to the portion (1b) of the panel extending parallel to the bodywork roof, said axis extending parallel to said vertical edges (9, 9') and the diameter of said wheel being no greater than the width of the guide path delimited by the two edges (9, 9').

7. A system according to claim 6, characterized in that it includes two top guide paths (7a, 7b) for two respective wheels (6a, 6b) fixed to the top portion of the panel (1).

8. A system according to claim 1, characterized in that an abutment and panel-centering member (16) is disposed in the vicinity of the top guide rail to stop and center the panel (1) relative to the bodywork at the end of its closure stroke, said member co-operating with a member (17) of complementary shape mounted on the panel.

EP 0 235 018 B1

*Fig.1*

*Fig.2*

Fig:3

Fig:4

Fig:5

Fig:6

Fig:7